# FASCICULE DE BREVET EUROPEEN

(11) **EP 1 179 449 B1**
(45) Date de publication et mention de la délivrance du brevet: **25.01.2006**
(21) Numéro de dépôt: 01402075.4
(22) Date de dépôt: 01.08.2001
(51) Int. Cl.: B60R 7/04

(54) **Ensemble de console notamment pour habitacle de véhicule automobile**
Mittelkonsole, insbesondere für den Kraftfahrzeuginnenraum
Console assembly, in particular for motor vehicle interior

(30) Priorité: 01.08.2000 FR 0010115; 01.08.2000 FR 0010116; 01.08.2000 FR 0010118
(43) Date de publication de la demande: 13.02.2002
(73) Titulaire: Renault s.a.s., 92100 Boulogne Billancourt (FR)
(72) Inventeur: Gallinato-Contino, Roland, 83783 Flayosc (FR)

(56) Documents cités:
- EP-A- 0 949 138
- DE-A- 19 742 408
- DE-U- 20 004 980
- DE-U- 29 611 382
- FR-A- 2 789 641
- US-A- 3 356 409
- US-A- 5 106 143
- US-A- 5 338 081
- US-A- 5 609 382
- US-A- 6 135 529
- PATENT ABSTRACTS OF JAPAN vol. 1999, no. 11, 30 septembre 1999 (1999-09-30) & JP 11 157391 A (KASAI KOGYO CO LTD), 15 juin 1999 (1999-06-15)
- PATENT ABSTRACTS OF JAPAN vol. 1999, no. 03, 31 mars 1999 (1999-03-31) & JP 10 329612 A (INOAC CORP), 15 décembre 1998 (1998-12-15)
- PATENT ABSTRACTS OF JAPAN vol. 2000, no. 02, 29 février 2000 (2000-02-29) & JP 11 321465 A (KASAI KOGYO CO LTD), 24 novembre 1999 (1999-11-24)
- PATENT ABSTRACTS OF JAPAN vol. 1997, no. 08, 29 août 1997 (1997-08-29) & JP 09 109778 A (TOYOTA AUTO BODY CO LTD), 28 avril 1997 (1997-04-28)

## Description

La présente invention se rapporte à un ensemble de console notamment pour habitacle de véhicule automobile.

On rappelle ici que l'on désigne couramment par « console » une sorte de boîte destinée notamment à être placée entre les sièges d'un habitacle de véhicule automobile pour remplir plusieurs fonctions, notamment celles d'accoudoir et de volume de rangement.

On connaît de la technique antérieure représentée par JP-A-11157391 un ensemble de console notamment pour habitacle de véhicule automobile selon le préambule de la revendication 1.

Cet ensemble de console est très pratique dans la mesure où il permet de régler la position de la console de manière à obtenir une ergonomie optimale.

Dans le cas où cet ensemble de console équipe un habitacle de véhicule automobile, il peut même permettre de déplacer la console entre les sièges avant et arrière de cet habitacle, offrant ainsi un grande variété d'agencements.

Cependant, il s'avère à l'usage que les moyens pour faire coulisser la console, comprenant généralement des rails et des roulettes, ont souvent tendance à se bloquer à cause de particules indésirables telles que des petits cailloux.

De surcroît, ces moyens sont peu esthétiques, ce qui est regrettable lorsque cet ensemble de console est destiné à équiper un habitacle de véhicule automobile où l'apparence de chaque détail doit être soignée.

D'autre part, il s'avère à l'usage que les moyens pour bloquer la console donnent souvent lieu à des jeux indésirables.

Une telle console est décrite dans le document JP11157391 qui concerne une console notamment pour habitacle de véhicule automobile comprenant des moyens de support destinés à être fixés sur une partie de plancher dudit habitacle, avec des moyens pour faire coulisser ladite console sur lesdits moyens de support, entre deux sièges. Les moyens de support comportent un bras coopérant avec un rail latéral de la console, sur le flanc extérieur de la console. Le bras est destiné à permettre de faire coulisser la console et de faire tourner la console derrière l'un des sièges. Le bras est situés à l'extérieur du volume défini par la console.

De tels jeux nuisent à la stabilité de la console lorsqu'elle est en position bloquée, et peuvent provoquer du bruit sous l'effet des vibrations induites par le moteur du véhicule automobile.

Un ensemble de console formant une boîte destinée notamment à être placée entre les sièges d'un habitacle de véhicule automobile est très pratique et très confortable, mais il peut s'avérer encombrant dans certaines situations, comme par exemple lorsqu'on souhaite placer des charges de forme allongée (planches, skis...) entre les deux fauteuils avant d'un véhicule automobile.

La présente invention a pour but de fournir un ensemble de console qui ne présente pas d'inconvénient d'encombrement en permettant si nécessaire d'augmenter le volume disponible à l'intérieur de l'habitacle.

La présente invention a pour but de fournir un ensemble de console qui ne présente pas les inconvénients ci-dessus énoncés.

On atteint ce but de l'invention avec un ensemble de console notamment pour habitacle de véhicule automobile selon la revendication 1.

Grâce à ces caractéristiques, les moyens pour faire coulisser la console sur les moyens de support sont protégés par la console elle-même, ce qui d'une part les met à l'abri de particules indésirables, et d'autre part permet d'obtenir une esthétique nettement plus satisfaisante que celle de la technique antérieure.

Suivant d'autres caractéristiques de l'ensemble de console selon l'invention:
- lesdits moyens pour faire coulisser ladite console sont placés intégralement à l'intérieur dudit volume,
- lesdits moyens pour bloquer ladite console sont placés au moins en partie à l'intérieur dudit volume,
- lesdits moyens pour bloquer ladite console sont placés intégralement à l'intérieur dudit volume,
- lesdits moyens de support sont conformés de manière que ladite console soit pratiquement en contact avec ladite partie de plancher quelle que soit celle desdites positions prédéterminées qu'elle occupe,
- lesdits moyens de support comprennent un organe de support s'étendant au moins partiellement à l'intérieur du volume défini par ladite console, lesdits moyens pour faire coulisser cette console étant interposés entre cette dernière et ledit organe de support,
- lesdits moyens pour faire coulisser ladite console comprennent des rails conformés en C fixés à l'intérieur de ladite console et recevant chacun au moins deux roulettes,
- ledit ensemble de console comprend des moyens pour rattraper les jeux entre lesdites roulettes et lesdits rails,
- lesdits moyens de rattrapage de jeu comprennent. des paires de coulisseaux montés coulissants à l'intérieur de rainures formées sur ledit organe de support, chaque coulisseau supportant une desdites roulettes, des moyens élastiques étant interposés entre les deux coulisseaux d'une même paire de manière à maintenir ces derniers écartés l'un de l'autre, et lesdites rainures étant conformées de manière que ce maintien d'écart ait pour effet de renforcer le pincement desdits rails par lesdites roulettes,
- lesdits moyens de rattrapage de jeu comprennent des galets écartés l'un de l'autre par des moyens élastiques tels qu'un ressort monté sur une tige elle-même montée fixe sur l'un desdits galets et coulissante sur l'autre de ces galets, ces galets étant interposés entre lesdites roulettes et lesdits rails,
- ledit organe de support est adapté pour être monté directement sur ladite partie de plancher,
- lesdits moyens de support comprennent en outre une embase destinée à être encastrée dans ladite partie de plancher et à recevoir ledit organe de support,
- ladite embase comprend au moins un logement destiné à recevoir un connecteur électrique mâle ou femelle et/ou au moins une cavité destinée à permettre le passage d'un flux d'air, et ledit organe de support comprend une ouverture destinée à recevoir un deuxième connecteur électrique destiné à coopérer avec ledit premier connecteur électrique et/ou un orifice destiné à être placé en vis-à-vis de ladite cavité,
- ledit ensemble de console comprend des moyens pour monter ledit organe de support de manière débrayable sur ladite embase,
- ledit ensemble de console comprenant une console, des moyens de support destinés à être fixés sur une partie de plancher dudit habitacle, des moyens pour faire coulisser ladite console sur lesdits moyens de support, et des moyens pour bloquer ladite console dans une pluralité de positions prédéterminées par rapport auxdits moyens de support, est caractérisé en ce que lesdits moyens de support s'étendant au moins partiellement à l'intérieur du volume défini par ladite console, lesdits moyens de support comportent des moyens permettant de monter ladite console de manière débrayable sur ladite partie de plancher,
- lesdits moyens de support comprennent alors un organe de support s'étendant au moins partiellement à l'intérieur du volume défini par ladite console, les moyens pour faire coulisser cette console étant interposés entre cette dernière et ledit organe de support, éventuellement, lesdits moyens de support comprenant alors en outre une embase destinée à être encastrée dans ladite partie de plancher et à recevoir ledit organe de support,
- ledit ensemble est caractérisé en ce que lesdits moyens de support comportent des moyens pour monter ladite console de manière débrayable sur ladite partie de plancher,
- lesdits moyens de support comprennent alors un organe de support s'étendant au moins partiellement à l'intérieur du volume défini par ladite console, une embase destinée à être fixée sur ladite partie de plancher, et les moyens pour monter ladite console de manière débrayable étant destinés à monter ledit organe de support de manière débrayable sur ladite embase,
- lesdits moyens de montage comprennent des crochets solidaires dudit organe de support ou de ladite embase, et des moyens pour solidariser ces crochets respectivement avec ladite embase ou avec ledit organe,
- lesdits moyens de solidarisation comprennent d'une part des encoches formées respectivement dans ladite embase ou dans ledit organe de support de manière à bloquer certains desdits crochets, et d'autre part un loquet rotatif destiné à bloquer les autres crochets,
- lesdits moyens de montage comprennent une pluralité de logements formés dans ladite embase, une pluralité de plots montés rotatifs sur ledit organe de support et comprenant chacun une protubérance correspondant sensiblement aux volumes défini par lesdits logements, et des moyens pour faire tourner lesdits plots de manière à engager lesdites protubérances à l'intérieur desdits logements,
- lesdits plots comprennent chacun une zone dentée, et lesdits moyens pour faire tourner ces plots comprennent un élément monté rotatif sur ledit organe de support et comprenant lui-même une zone dentée coopérant avec les zones dentées desdits plots,
- ledit ensemble de console comprend une manette pour actionner ledit loquet ou ledit élément, et cette manette s'étend vers l'avant de ladite console,
- ledit ensemble de console comprend des moyens pour verrouiller ledit organe de support sur ladite console lorsqu'on sépare cette dernière de ladite embase,
- lesdits moyens de verrouillage comprennent :
   - une tringle montée rotative sur ledit organe de support et s'étendant selon une direction sensiblement parallèle à celle desdits rails, supportant des premier et deuxième ergots décalés axialement et angulairement l'un par rapport à l'autre,
   - des moyens de logement solidaires de ladite console et situés au droit dudit premier ergot,
   - des moyens de nervure solidaires de ladite embase et placés de manière à pouvoir pousser sur ledit deuxième ergot afin d'écarter ledit premier ergot desdits moyens de logement, de manière a autoriser les mouvements de ladite console par rapport audit organe de support lorsque cette console est placée sur ladite embase, et
   - des moyens élastiques pour rappeler ladite tringle vers une position où ledit premier ergot est engagé dans lesdits moyens de logement, de manière à bloquer ladite console par rapport audit organe de support lorsque cette console est séparée de ladite embase,
- ledit ensemble de console comprend deux pistes s'étendant à partir de ladite embase, de part et d'autre de celle-ci, et ladite console comprend une petite roue agencée de manière à pouvoir coopérer avec lesdites pistes,
- ledit organe de support est un étrier, lesdits moyens pour faire coulisser ladite console étant interposés entre cette console et les ailes de cet étrier,
- ladite console comprend un compartiment s'étendant notamment entre les ailes dudit étrier et pouvant être fermé par un couvercle,
- ledit compartiment définit une chambre située à l'intérieur du volume défini par ladite console et communiquant avec ladite cavité par l'intermédiaire dudit orifice,
- lesdits moyens pour bloquer ladite console dans ladite pluralité de positions prédéterminées comprennent une tige crantée montée mobile sur ladite console entre une position embrayée où l'un au moins desdits crans coopère avec au moins un doigt d'indexation solidaire desdits moyens de support, et une position débrayée où cette tige est écartée de ce doigt,
- lesdits moyens de blocage comprennent des moyens de came montés rotatifs sur ladite console entre une position embrayée dans laquelle ces moyens de came s'appuient contre au moins une surface de contact formée sur lesdits moyens de support, et une position débrayée dans laquelle ces moyens de came sont écartés de ladite surface de contact,
- lesdits moyens de came comprennent une pluralité de cames supportées par une pluralité de tiges d'actionnement montées rotatives à l'intérieur de logements formés dans lesdits moyens de support.
- lesdits moyens pour bloquer ladite console dans ladite pluralité de positions prédéterminées comprennent au moins une tige d'actionnement supportant au moins une came, cette tige étant montée rotative sur ladite console entre une position embrayée dans laquelle ladite came s'appuie contre une surface de contact formée sur lesdits moyens de support, et une position débrayée où ladite came est écartée de ladite surface de contact,
- ledit ensemble de console comprend quatre tiges d'actionnement s'étendant dans quatre logements formés dans lesdits rails,
- ledit ensemble de console comprend au moins une poignée d'actionnement de ladite tige située à l'une des extrémités de ladite console,
- ledit ensemble de console comprend deux poignées d'actionnement situées à deux extrémités opposées de ladite console.

D'autres caractéristiques et avantages de la présente invention apparaîtront à la lecture de la description qui va suivre et à l'examen du dessin annexé, dans lequel:
- la figure 1 est une vue en perspective de l'ensemble de console selon l'invention lorsqu'il est monté sur un tunnel de plancher d'habitacle de véhicule automobile,
- la figure 2 est une vue partielle en coupe de cet ensemble de console selon le plan II-II de la figure 1,
- la figure 3 est une vue partielle en perspective des moyens de support de cet ensemble de console,
- la figure 4 est une vue partielle analogue à celle de la figure 2 d'une première variante des moyens pour faire coulisser la console sur ses moyens de support,
- les figures 5 et 6 sont des vues respectivement analogue à celle de la figure 4 et de côté d'une deuxième variante des moyens pour faire coulisser la console sur ses moyens de support,
- la figure 7 est une vue analogue à celle de la figure 4 d'une variante des moyens pour bloquer la console sur ses moyens de support,
- les figures 8 et 9 sont des vues respectivement de dessus et de dessous d'organes faisant partie d'une variante desdits moyens de support,
- la figure 10 est une vue en coupe selon les lignes X-X des figures 8 et 9 de ces organes lorsqu'ils coopèrent entre eux, et
- les figures 11 et 12 sont des vues en coupe analogues à celle de la figure 2, selon deux plans différents, mettant en évidence des moyens permettant de verrouiller l'un des organes formant lesdits moyens de support sur ladite console lorsqu'on sépare cette dernière dudit tunnel de plancher.

Sur ces figures, des références identiques désignent des organes ou ensembles d'organes identiques ou analogues.

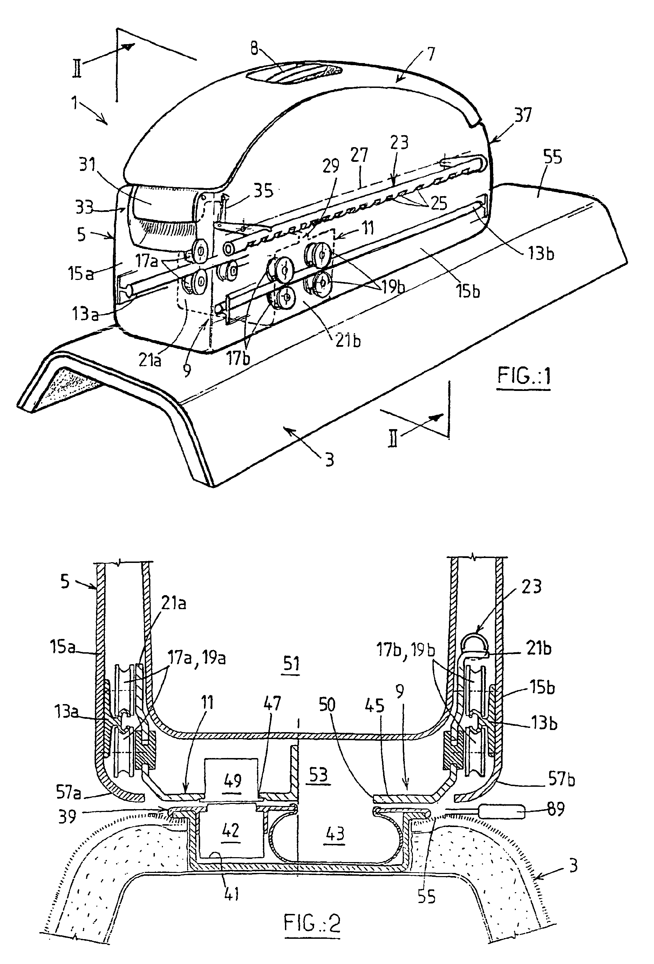

On se reporte à présent à la figure 1, sur laquelle on voit l'ensemble de console 1 selon l'invention lorsqu'il est monté sur un tunnel 3 de plancher d'habitacle de véhicule automobile.

On rappelle ici que l'on désigne par le terme « tunnel » une partie de plancher d'habitacle de véhicule automobile permettant le passage de différents organes s'étendant entre les trains avant et arrière (non représentés) de ce véhicule.

L'ensemble de console selon l'invention comprend une console 5 définissant un volume par exemple sensiblement parallélépipédique, fermé sur sa partie supérieure (c'est-à-dire sur sa partie située vers le haut de la figure) par un couvercle 7 muni d'une poignée de préhension 8.

Cette console 5 est montée coulissante sur des moyens de support fixes 9 comprenant un étrier 11 qui s'étend au moins partiellement à l'intérieur du volume défini par cette console.

Les moyens permettant à la console 5 de coulisser sur les moyens de support fixes 9 comprennent d'une part des rails 13a, 13b fixés sur les faces internes des parois latérales 15a, 15b de la console, et d'autre part au moins deux paires de roulettes 17a, 19a, 17b, 19b montées sur chacune des ailes 21a, 21b de l'étrier 11 de manière à pincer les rails 13a, 13b.

L'ensemble de console selon l'invention comprend en outre des moyens pour bloquer la console 5 dans une pluralité de positions prédéterminées.

Ces moyens comprennent une tige 23 s'étendant suivant une direction sensiblement parallèle à celle des rails 13a, 13b et pourvue d'une pluralité de crans 25.

Cette tige est montée pivotante autour d'un axe 27 à l'intérieur de la console 5 entre une position embrayée où l'un au moins des crans 25 coopère avec au moins un doigt 29 solidaire de l'une 21b des ailes de l'étrier 11, et une position débrayée où cette tige est écartée de ce doigt.

Des moyens d'actionnement permettent de déplacer cette tige crantée 23 entre ces deux positions.

Ces moyens comprennent au moins une poignée d'actionnement 31 montée pivotante sur l'une des extrémités 33 de la console 5 près du couvercle 7, et reliée à la tige crantée 23 par un mécanisme classique comprenant par exemple une biellette 35.

De manière préférée, les moyens d'actionnement de la tige crantée 23 comprennent également une deuxième poignée (non représentée) analogue à la poignée 31 et située sur l'autre extrémité 37 de la console 5.

On se reporte à présent à la figure 2, sur laquelle on voit que, de manière préférée, les moyens de support 9 comprennent également une embase 39 encastrée dans le tunnel 3, sur laquelle est monté l'étrier 11.

Cette embase comprend de préférence un logement 41 accueillant un connecteur électrique mâle ou femelle 42, et une cavité 43 permettant le passage d'un flux d'air.

L'âme 45 de l'étrier 11 comprend de préférence une ouverture 47 accueillant un connecteur électrique 49 coopérant avec le connecteur 42, ainsi qu'un orifice 50 placé en vis-à-vis de la cavité 43.

La console 5 comprend un compartiment 51 s'étendant notamment entre les ailes 21a, 21b de l'étrier 11 et pouvant être fermé par le couvercle 7 (voir figure 1).

Ce compartiment définit, avec les parois latérales 15a, 15b de la console 5, une chambre 53 communiquant avec la cavité 43 par l'intermédiaire de l'orifice 50.

On notera que, de manière préférée, l'embase 39 est conformée de manière que l'âme 45 de l'étrier 11 affleure avec la partie supérieure 55 du tunnel 3, et que les parois latérales 15a, 15b de la console 5 sont conformées de manière que leurs bords inférieurs 57a, 57b affleurent avec l'âme 45 de l'étrier 11.

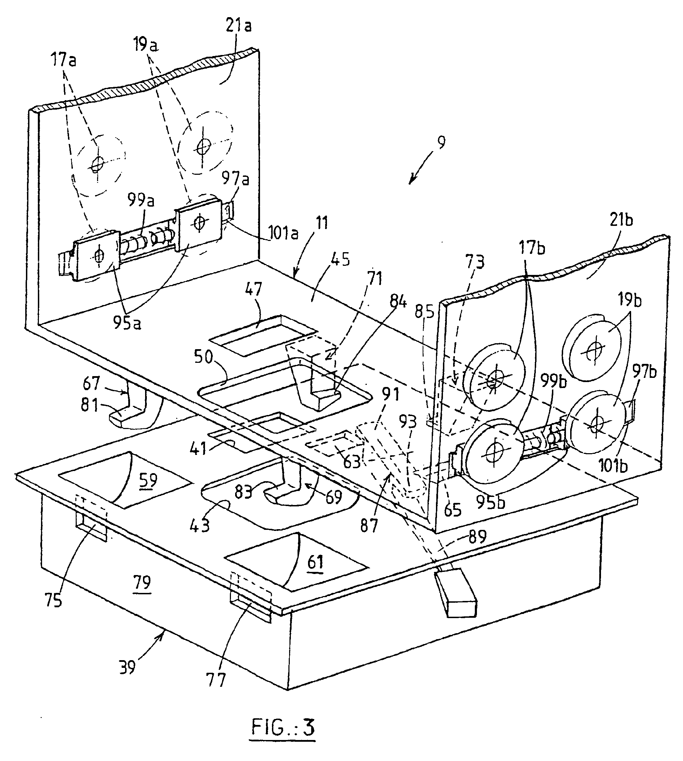

On se reporte à présent à la figure 3, sur laquelle on voit la manière dont l'étrier 11 est monté sur l'embase 39.

L'embase 39 comprend des évidements 59, 61, 63, 65 destinés à accueillir respectivement des crochets 67, 69, 71, 73 solidaires de l'âme 45 de l'étrier 11.

Des encoches 75, 77 formées par exemple dans une paroi latérale 79 de l'embase 39 communiquent respectivement avec les évidements 59 et 61 de manière à accueillir les extrémités 81, 83 des crochets 67, 69.

Les extrémités 84, 85 des crochets 71, 73 sont biseautées selon des pentes opposées.

Un loquet 87 pouvant être actionné par une manette 89 est monté rotatif à l'intérieur de l'embase 39 entre une position fermée où ses parties actives 91, 93 s'étendent dans les évidements 63 et 65 de manière à coopérer avec les extrémités biseautées 84, 85 des crochets 71, 73, et une position ouverte où ces parties actives sont écartées des évidements 63 et 65.

On voit également sur la figure 3 que l'ensemble de console selon l'invention comprend des paires de coulisseaux 95a, 95b montés coulissants à l'intérieur de rainures 97a, 97b formées dans les ailes 21a, 21b de l'étrier 11, chacun de ces coulisseaux portant une roulette des paires 17a, 19a, 17b, 19b.

Des moyens élastiques tels que des ressorts 99a, 99b sont interposés respectivement entre les coulisseaux 95a, 95b.

Les rainures 97a, 97b sont conformées de manière que les coulisseaux montent légèrement vers le haut (c'est-à-dire vers le bord supérieur de la feuille) lorsqu'ils atteignent les extrémités de ces rainures.

Un tel résultat peut par exemple être obtenu en incurvant légèrement vers le haut les bords inférieurs 101a, 101b des rainures 97a, 97b au voisinage de leurs extrémités.

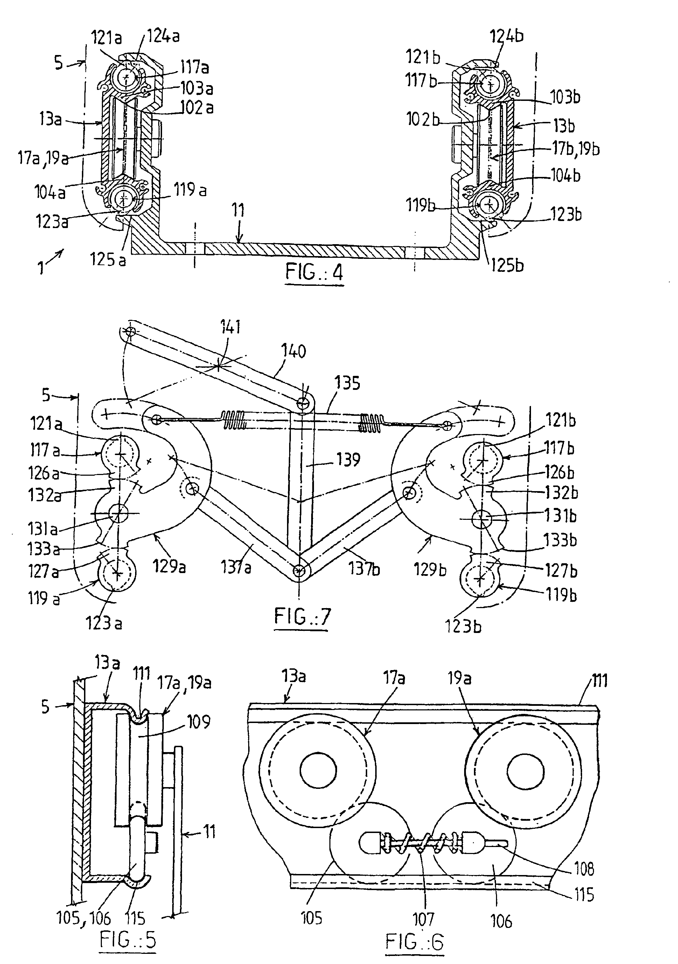

Selon une première variante (voir figure 4) des moyens permettant à la console 5 de coulisser par rapport à l'étrier 11, les rails 13a, 13b peuvent être profilés sensiblement en C et recevoir chacun au moins deux roulettes 17a, 19a et 17b, 19b (les roulettes situées vers l'avant de la figure 17a, 17b cachant les roulettes situées vers l'arrière de la figure 19a, 19b).

Comme cela est représenté, les gorges 102a, 102b de ces roulettes et les parties supérieures 103a, 103b et inférieures 104a, 104b des rails coopérant avec ces gorges présentent de préférence des sections en V, un léger jeu étant ménagé entre ces gorges et ces parties.

Selon une deuxième variante des moyens permettant à la console 5 de coulisser par rapport à l'étrier 11 (voir figures 5 et 6, sur lesquelles on n'a représenté qu'un rail et ses roulettes associées), chaque rail 13a peut être conformé en C et recevoir d'une part deux roulettes 17a, 19a et d'autre part deux galets 105, 106 écartés l'un de l'autre par des moyens élastiques tels qu'un ressort 107 monté sur une tige 108 elle-même montée fixe sur l'un des galets et coulissante sur l'autre.

Comme cela est représenté, les roulettes 17a, 19a comprennent chacune une gorge 109 coopérant avec une partie supérieure 111 du rail 13a et avec un galet 105, 106, et ces galets roulent dans une gouttière formée dans une partie inférieure 115 du rail 13a.

Selon une variante des moyens pour bloquer la console 5 dans une pluralité de positions prédéterminées (voir figures 4 et 7), les parties supérieures 103a, 103b et inférieures 104a, 104b des rails 13a, 13b peuvent définir des logements dans lesquels s'étendent des tiges d'actionnement 117a, 117b et 119a, 119b, ces tiges supportant chacune au moins une came 121a, 121b et 123a, 123b susceptible de coopérer avec une surface de contact 124a, 124b, et 125a, 125b de l'étrier 11.

Comme cela est visible sur la figure 7, les tiges d'actionnement 117a, 117b et 119a, 119b comprennent localement des parties dentées 126a, 126b et 127a, 127b.

Deux organes d'actionnement en C 129a, 129b sont montés pivotants sur l'étrier 11 autour d'axes 131a, 131b s'étendant selon une direction sensiblement parallèle à celle des tiges 117a, 117b et 119a, 119b.

Ces organes d'actionnement comprennent des parties dentées 132a, 132b et 133a, 133b coopérant respectivement avec les parties dentées 126a, 126b et 127a, 127b des tiges 117a, 117b et 119a, 119b.

Un ressort 135 rappelle l'un vers l'autre les deux organes d'actionnement 129a, 129b.

Deux biellettes d'actionnement 137a, 137b sont articulées sur les organes d'actionnement 129a, 129b, ces biellettes étant également articulées entre elles.

Une biellette intermédiaire 139 relie ces biellettes d'actionnement à un levier de commande 140 monté rotatif autour d'une axe 141 s'étendant selon une direction sensiblement parallèle à celle des tiges 117a, 117b et 119a, 119b.

Ce levier de commande est lui-même relié par exemple par l'intermédiaire d'une tringlerie à une ou deux poignées d'actionnement analogues à la poignée 31 ou, en variante, à un moteur électrique de commande (non représenté).

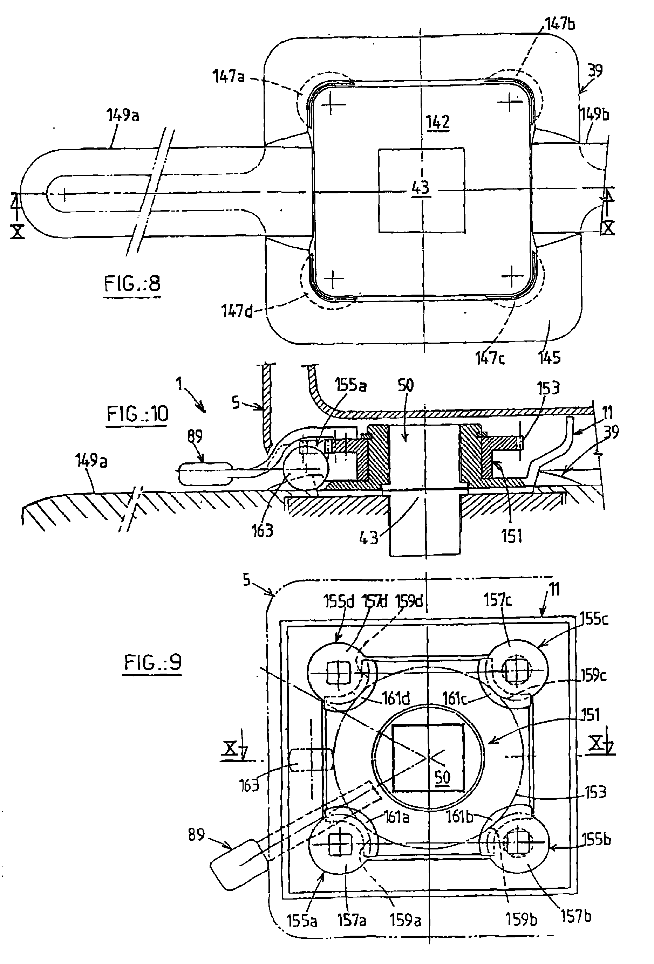

On se reporte à présent aux figures 8 à 10, sur lesquelles on a représenté différents organes formant une variante des moyens de support de la console 5.

Comme on peut le voir sur les figures 8 et 9, cette variante comprend une embase 39 comprenant une partie centrale sensiblement plate et rectangulaire 142 dans laquelle est formée une cavité 43, et une bordure 145 s'étendant à la périphérie de la partie centrale 142.

Quatre logements 147a, 147b, 147c, 147d définissant sensiblement des portions de cylindre s'étendent sous la bordure 145 à partir des coins de la partie centrale 142.

En option, l'embase 39 peut comprendre au moins une, et de préférence deux pistes 149a, 149b s'étendant de part et d'autre de la bordure 145.

Comme on peut le voir sur les figures 9 et 10, la variante des moyens de support comprend également un étrier 11 dans lequel est formé une cheminée 50 de section intérieure sensiblement identique à celle de la cavité 43, et de section extérieure circulaire.

Un élément tubulaire 151 comportant, dans sa partie supérieure, une zone dentée 153 et une manette 89 s'étendant radialement de préférence vers l'avant de la console 5, est monté rotatif sur la cheminée 50.

En outre, quatre plots 155a, 155b, 155c, 155d sont montés rotatifs sur l'étrier 11 autour d'axes sensiblement parallèles à celui de l'élément tubulaire 151, les positions de ces plots correspondant sensiblement à celle des coins de la partie centrale rectangulaire 142.

Chacun de ces plots comporte un corps sensiblement cylindrique 157a, 157b, 157c, 157d et, dans sa partie supérieure, une zone dentée 159a, 159b, 159c, 159d s'étendant sur un peu plus d'un quart de circonférence et coopérant avec la zone dentée 153 de l'élément tubulaire 151 et, dans sa partie inférieure, une protubérance en forme de portion de cylindre 161a, 161b, 161c, 161d s'étendant sur un peu plus d'un quart de circonférence et correspondant sensiblement au volume défini par les logements 147a, 147b, 147c, 147d.

En option, une petite roue 163 peut être montée rotative sur la console 5 autour d'un axe sensiblement horizontal, cette petite roue étant agencée de manière à pouvoir coopérer avec les pistes 149a et 149b.

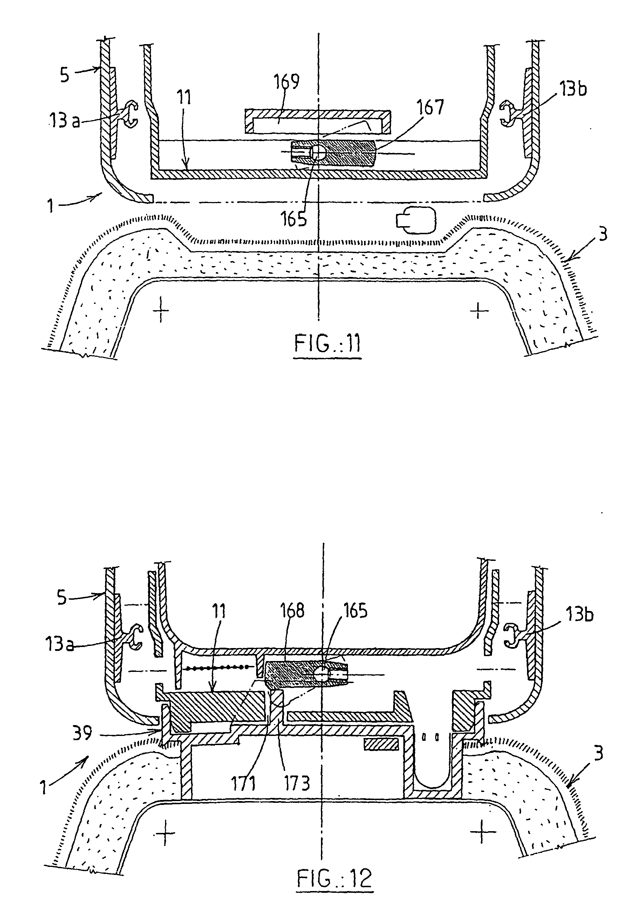

On se reporte à présent aux figures 11 et 12, sur lesquelles on a représenté des moyens permettant de verrouiller l'étrier 11 sur la console 5 lorsqu'on sépare cette dernière du tunnel de plancher 3.

Comme on peut le voir ces figures, ces moyens comprennent une tringle 165 s'étendant selon une direction sensiblement parallèle à celle des rails 13a, 13b, montée rotative sur l'étrier 11 et supportant des premier 167 et deuxième 168 ergots décalés axialement et angulairement l'un par rapport à l'autre.

Des moyens élastiques (non représentés) tels qu'un ressort spiral rappellent la tige 165 vers une position où les ergots 167, 168 occupent les positions représentées en trait mixte.

Un organe formant logement 169, solidaire de la console 5, s'étend au droit du premier ergot 167.

Par ailleurs, l'étrier 11 comprend une fente 171 permettant le passage d'un organe formant nervure 173 solidaire de l'embase 39 et située au droit du deuxième ergot 168.

Le mode d'utilisation et les avantages de l'ensemble de console selon l'invention résultent directement de la description qui précède.

Pour monter cet ensemble de console sur le tunnel 3, on commence par encastrer l'embase 39 dans ce dernier.

Dans le mode de réalisation représenté à la figure 3, on solidarise ensuite l'étrier 11 et la console 5 sur cette embase en plaçant les extrémités 81, 83 des crochets 67, 69 dans les encoches 75, 77 et les crochets 71, 73 dans les évidements 63, 65, puis en faisant pivoter le loquet 87 au moyen de la manette 89 de sorte que les parties actives 91, 93 de ce loquet viennent en prise avec les extrémités 84, 85 des crochets 71, 73.

Dans la variante représentée sur les figures 8 à 10, on place la console 5 de manière que l'étrier 11 vienne en vis-à-vis de la partie centrale 142 de l'embase 39 et que les plots 155a, 155b, 155c, 155d viennent se placer dans les coins de la partie centrale 142.

On fait ensuite tourner la manette 89, ce qui a pour effet de faire pivoter l'élément tubulaire 151 autour de la cheminée 50, et ainsi de faire pivoter chacun des plots 155a, 155b, 155c, 155d grâce aux zones dentées 153 et 159a, 159b, 159c, 159d.

Ce faisant, les protubérances 161a, 161b, 161c, 161d viennent se placer dans les logements 147a, 147b, 147c, 147d de l'embase 39, ce qui permet de solidariser l'étrier 11 sur l'embase 39.

On remarquera que cette variante permet d'emboîter verticalement l'étrier 11 sur l'embase 9, ce qui est très commode notamment lorsque la console 5 est remplie d'articles pesants et qu'il est difficile de l'incliner.

On remarquera aussi que dans cette variante, le mécanisme permettant solidariser l'étrier 11 sur l'embase 39 est intégré à cet étrier et non pas à cette embase comme dans le mode de réalisation de la figure 3.

De la sorte, lorsqu'on enlève la console 5, ce mécanisme ne reste pas exposé sur le tunnel 3, ce qui est esthétiquement plus satisfaisant et évite la souillure de ce mécanisme par des particules indésirables.

Comme on peut le comprendre à présent, l'ensemble de console selon l'invention peut être très facilement placé à l'intérieur ou extrait de l'habitacle d'un véhicule automobile, ce qui permet de faire varier de manière très simple le volume disponible à l'intérieur de cet habitacle.

On notera également qu'il est préférable que la manette 89 s'étende vers l'avant de la console 5, comme cela est représenté sur la figure 10, de manière que cette manette demeure cachée par cette console dans la plupart des positions occupées par cette dernière.

Pour faire coulisser la console 5 par rapport au tunnel 3 dans le mode de réalisation représenté sur les figures 1 à 3, on commence par soulever la poignée d'actionnement 31 de manière à placer la tige 23 dans sa position débrayée, on avance ou on recule la console 5 jusqu'à la position souhaitée, et on relâche la poignée 31 pour replacer la tige 23 dans sa position embrayée et pour bloquer la console 5 dans sa nouvelle position.

Lorsque la console 5 comprend deux poignées d'actionnement, on peut changer sa position tant depuis l'avant que depuis l'arrière de l'habitacle du véhicule.

Dans le mode de réalisation représenté à la figure 3, les systèmes de coulisseaux 95a, 95b et de ressorts 99a, 99b permettent de rattraper les jeux de la console 5 par rapport à l'étrier 11 aussi bien lorsque cette console coulisse par rapport à cet étrier que lorsque cette console est bloquée par rapport à cet étrier.

La variante représentée aux figures 5 et 6 offre une alternative à ces moyens de rattrapage de jeu, qui présente l'avantage de ne pas nécessiter la formation de fentes présentant une géométrie bien précise dans les ailes de l'étrier 11.

Dans la variante représentée sur les figures 4 et 7, le ressort 135 maintient les deux organes d'actionnement 129a, 129b dans une position ayant pour effet de maintenir les cames 121a, 121b et 123a, 123b en butée contre les surfaces de contact 124a, 124b et 125a, 125b.

La coopération des cames 121a, 121b et 123a, 123b avec les surfaces de contact 124a, 124b et 125a, 125b permet de bloquer la console 5 par rapport à l'étrier 11 en réalisant en quelque que sorte un serrage de ces organes l'un par rapport à l'autre.

On peut de la sorte d'une part limiter les jeux entre la console 5 et l'étrier 11, et d'autre part soulager les roulettes 17a, 19a et 17b, 19b du poids de la console 5.

Lorsqu'on on fait tourner le levier de commande 140 dans le sens anti-horaire autour de l'axe 141 au moyen de l'une des poignées d'actionnement (non représentées), ce levier fait à son tour tourner les deux organes d'actionnement 129a, 129b autour de leurs axes respectifs 131a, 131b, lesquels font à leur tour tourner les tiges d'actionnement 117a, 117b et 119a, 119b dans leurs logements respectifs.

Ce faisant, les cames 121a, 121b et 123a, 123b s'écartent des surfaces de contact 124a, 124b et 125a, 125b : il devient alors possible de faire coulisser la console 5 par rapport à l'étrier 11.

Lorsque la console 5 supporte une petite roue 163 susceptible de rouler sur des pistes 149a, 149b comme cela est représenté sur les figures 8 à 10, la console 5 peut se déplacer sans porte-à-faux excessif, ce qui permet de limiter les risques d'apparition de jeux entre cette console et l'étrier 11.

Dans le cas où l'ensemble de console est équipé d'un mécanisme tel que représenté sur les figures 11 et 12, on peut verrouiller l'étrier 11 sur la console 5 lorsqu'on sépare cette dernière du tunnel 3.

Ce verrouillage s'opère de la manière suivante : lorsqu'on libère l'étrier 11 de l'embase 39, l'organe formant nervure 173 cesse d'exercer un effort sur le deuxième ergot 168.

Ce faisant, sous l'effet des moyens élastiques susmentionnés (non représentés), les premier 167 et deuxième 168 ergots viennent occuper les positions représentées en trait mixte sur les figures 11 et 12.

En particulier, le premier ergot 167 vient se placer dans l'organe formant logement 169, ce qui a pour effet de verrouiller l'étrier 11 sur la console 5.

De la sorte, même lorsqu'on débraie les moyens de blocage représentés aux figures 1, 2, 4 et 7, l'étrier 11 est immobilisé par rapport à la console 5, ce qui permet d'éviter les mouvement intempestifs de ces organes l'un par rapport à l'autre lorsque l'ensemble de console est séparé du tunnel 3 en vue d'être stocké ailleurs.

Le compartiment 51 (voir figure 2) peut par exemple servir à ranger des objets tels que des cassettes audio, des boissons ou des aliments.

Dans ces derniers cas, on peut avantageusement faire circuler de l'air froid en provenance de la cavité 43 à travers l'orifice 50 (ou à travers la cheminée 50 dans le cas de la variante représentée sur les figures 8 à 10) dans la chambre 53 de manière à réfrigérer le compartiment 51.

Pour accéder au contenu du compartiment 51, il suffit de soulever le couvercle 7 au moyen de la poignée de préhension 8.

Par ailleurs, les organes de connexion électrique mâle et femelle 42, 49 peuvent être utilisés pour alimenter certains équipements placés sur la console 5 tels qu'un allume-cigares.

Comme on peut le comprendre à présent, les moyens permettant à la console 5 de coulisser par rapport au tunnel 3 sont bien protégés à l'intérieur du volume défini par cette console, ce qui évite leur encrassement et leur blocage par des particules indésirables telles que des petits cailloux, et permet d'obtenir une apparence esthétique tout à fait satisfaisante.

Il en est de même des moyens permettant de bloquer cette console dans une pluralité de positions prédéterminées.

Par ailleurs, le fait que l'âme 45 de l'étrier 11 affleure à la fois avec la partie supérieure 55 du tunnel 3 et avec les bords inférieurs 57a, 57b des parois latérales 15a, 15b de la console 5, permet d'obtenir que cette console soit pratiquement en contact avec le tunnel 3 quelle que soit celle des positions prédéterminées qu'elle occupe, ce qui permet d'obtenir un ensemble à la fois compact et très satisfaisant au plan de l'esthétique.

On notera également que l'ensemble de console selon l'invention est très facile à monter et à démonter, grâce aux moyens de fixation débrayables exposés ci-dessus: il suffit d'actionner la manette 89 pour effectuer ces différentes opérations.

On notera également que l'ensemble de console selon l'invention permet d'établir de manière très simple des liaisons électriques et des communications de fluide entre le tunnel 3 et la console 5, compatibles avec les changements de positions de cette dernière et pouvant aisément être déconnectées ou re-connectées lorsqu'on souhaite respectivement démonter ou remonter cette console.

Bien entendu, la présente invention n'est pas limitée au mode de réalisation décrit et représenté, fourni à titre d'exemple illustratif et non limitatif.

C'est ainsi que l'on pourrait remplacer l'étrier 11 par un organe ayant une autre forme.

C'est ainsi également que cet étrier pourrait être monté directement sur le tunnel 3.

C'est ainsi également que l'ensemble de console 1 pourrait être monté sur une autre partie de plancher qu'un tunnel.

C'est ainsi encore que l'ensemble de console 1 pourrait équiper un habitacle d'un véhicule de transport autre qu'un véhicule automobile.

## Revendications

1. Ensemble de console (1) notamment pour habitacle de véhicule automobile comprenant une console (5), des moyens de support (9) destinés à être fixés sur une partie de plancher (3) dudit habitacle, des moyens (13a, 13b, 17a, 19a, 17b, 19b) pour faire coulisser ladite console (5) sur lesdits moyens de support (9), et des moyens (23, 29 ; 117a, 117b, 119a, 119b, 121a, 121b, 123a, 123b) pour bloquer ladite console (5) dans une pluralité de positions prédéterminées par rapport auxdits moyens de support (9), lesdits moyens (13a, 13b, 17a, 19a, 17b, 19b) pour faire coulisser ladite console (5) étant placés au moins en partie à l'intérieur du volume défini par ladite console (5), lesdits moyens (13a, 13b, 17a, 19a, 17b, 19b) pour faire coulisser ladite console (5) comprenant des rails (13a, 13b) **caractérisé en ce que** les rails (13a, 13b) sont fixés à l'intérieur de ladite console (5) et sont pincés entre des paires de roulettes (17a, 19a, 17b, 19b) montées sur un organe de support (11)], les rails étant fixés sur des faces internes de parois latérales (15a, 15b) de la console, lesdits moyens pour faire coulisser la console sur les moyens de support étant protégés par la console.

2. Ensemble de console (1) selon la revendication 1, **caractérisé en ce que** lesdits moyens (13a, 13b, 17a, 19a, 17b, 19b) pour faire coulisser ladite console (5) sont placés intégralement à l'intérieur dudit volume.

3. Ensemble de console (1) selon l'une des revendications 1 ou 2, **caractérisé en ce que** lesdits moyens (23, 29 ; 117a, 117b, 119a, 119b, 121a, 121b, 123a, 123b) pour bloquer ladite console (5) sont placés au moins en partie à l'intérieur dudit volume.

4. Ensemble de console (1) selon la revendication 3, **caractérisé en ce que** lesdits moyens (23, 29 ; 117a, 117b, 119a, 119b, 121a, 121b, 123a, 123b) pour bloquer ladite console (5) sont placés intégralement à l'intérieur dudit volume.

5. Ensemble de console (1) selon l'une quelconque des revendications précédentes, **caractérisé en ce que** lesdits moyens de support (9) sont conformés de manière que ladite console (5) soit adaptée à être pratiquement en contact avec ladite partie de plancher (3) quelle que soit celle desdites positions prédéterminées qu'elle occupe.

6. Ensemble de console (1) selon l'une quelconque des revendications précédentes, **caractérisé en ce que** lesdits moyens de support (9) comprennent ledit organe de support (11) s'étendant au moins partiellement à l'intérieur du volume défini par ladite console (5), lesdits moyens (13a, 13b, 17a, 19a, 17b, 19b) pour faire coulisser cette console (5) étant interposés entre cette dernière et ledit organe de support (11).

7. Ensemble de console (1) selon la revendication 1, **caractérisé en ce que** les rails (13a, 13b) fixés à l'intérieur de ladite console (5) sont conformés en C et **reçoivent** chacun au moins deux roulettes (17a, 19a, 17b, 19b).

8. Ensemble de console (1) selon l'une des revendications 1 ou 8, **caractérisé en ce qu'**il comprend des moyens (95a, 95b, 99a, 99b ; 105, 106, 107, 108) pour rattraper les jeux entre lesdites roulettes (17a, 19a, 17b, 19b) et lesdits rails (13a, 13b).

9. Ensemble de console (1) selon les revendications 1 et 9, **caractérisé en ce que** lesdits moyens de rattrapage de jeu comprennent des paires de coulisseaux (95a, 95b) montés coulissants à l'intérieur de rainures (97a, 97b) formées sur ledit organe de support (11), chaque coulisseau supportant une desdites roulettes (17a, 19a, 17b, 19b), des moyens élastiques (99a, 99b) étant interposés entre les deux coulisseaux d'une même paire de manière à maintenir ces derniers écartés l'un de l'autre, et lesdites rainures (97a, 97b) étant conformées de manière que ce maintien d'écart ait pour effet de renforcer le pincement desdits rails (13a, 13b) par lesdites roulettes (17a, 19a, 17b, 19b).

10. Ensemble de console (1) selon les revendications 7 et 8, **caractérisé en ce que** lesdits moyens de rattrapage de jeu comprennent des galets (105, 106) écartés l'un de l'autre par des moyens élastiques tels qu'un ressort (107) monté sur une tige (108) elle-même montée fixe sur l'un (105) desdits galets et coulissante sur l'autre (106) de ces galets, ces galets étant interposés entre lesdites roulettes (17a, 19a, 17b, 19b) et lesdits rails (13a, 13b).

11. Ensemble de console (1) selon l'une quelconque des revendications 1,6 à 10, **caractérisé en ce que** ledit organe de support (11) est adapté pour être monté directement sur ladite partie de plancher (3).

12. Ensemble de console (1) selon l'une quelconque des revendications 1, 6 à 10, **caractérisé en ce que** lesdits moyens de support (9) comprennent en outre une embase (39) destinée à être encastrée dans ladite partie de plancher (3) et à recevoir ledit organe de support (11).

13. Ensemble de console (1) selon la revendication 12, **caractérisé en ce que** ladite embase (39) comprend au moins un logement (41) destiné à recevoir un connecteur électrique mâle ou femelle (42) et/ou au moins une cavité (43) destinée à permettre le passage d'un flux d'air, et **en ce que** ledit organe de support (11) comprend une ouverture (47) destinée à recevoir un deuxième connecteur électrique (49) destiné à coopérer avec ledit premier connecteur électrique (42) et/ou un orifice (50) destiné à être placé en vis-à-vis de ladite cavité (43).

14. Ensemble de console (1) selon l'une des revendications 12 ou 13, **caractérisé en ce qu'**il comprend des moyens (59, 61, 63, 65, 67, 69, 71, 73, 75, 77, 87 ; 147a, 147b, 147c, 147d, 155a, 155b, 155c, 155d, 161a, 161b, 161c, 161d) pour monter ledit organe de support (11) de manière débrayable sur ladite embase (39).

15. Ensemble de console (1) selon la revendication 1, **caractérisé en ce que** lesdits moyens de support (9) comportent des moyens (59, 61, 63, 65, 67, 69, 71, 73, 75, 77, 87 ; 147a, 147b, 147c, 147d, 155a, 155b, 155c, 155d, 161a, 161b, 161c, 161d) permettant de monter ladite console (5) de manière débrayable sur ladite partie de plancher (3).

16. Ensemble de console (1) selon la revendication 15, **caractérisé en ce que** lesdits moyens de support (9) comprennent un organe de support (11) s'étendant au moins partiellement à l'intérieur du volume défini par ladite console (5), les moyens (13a, 13b, 17a, 19a, 17b, 19b) pour faire coulisser cette console (5) étant interposés entre cette dernière et ledit organe de support (11).

17. Ensemble de console (1) selon la revendication 16, **caractérisé en ce que** lesdits moyens de support (9) comprennent en outre une embase (39) destinée à être encastrée dans ladite partie de plancher (3) et à recevoir ledit organe de support (11).

18. Ensemble de console (1) selon la revendication 1, **caractérisé en ce que** lesdits moyens de support (9) comportent des moyens (59, 61, 63, 65, 67, 69, 71, 73, 75, 77, 87 ; 147a, 147b, 147c, 147d, 155a, 155b, 155c, 155d, 161a, 161b, 161c, 161d) pour monter ladite console (5) de manière débrayable sur ladite partie de plancher (3).

19. Ensemble de console (1) selon la revendication 18, **caractérisé en ce que** lesdits moyens de support (9) comprennent un organe de support (11) s'étendant au moins partiellement à l'intérieur du volume défini par ladite console (5), une embase (39) destinée à être fixée sur ladite partie de plancher (3), et les moyens (59, 61, 63, 65, 67, 69, 71, 73, 75, 77, 87 ; 147a, 147b, 147c, 147d, 155a, 155b, 155c, 155d, 161a, 161b, 161c, 161d) pour monter ladite console (5) de manière débrayable étant destinés à monter ledit organe de support (11) de manière débrayable sur ladite embase (39).

20. Ensemble de console (1) selon l'une quelconque des revendications 14, 16 ou 19, **caractérisé en ce que** lesdits moyens de montage comprennent des crochets (67, 69, 71, 73) solidaires dudit organe de support (11) ou de ladite embase (39), et des moyens (75, 77, 87) pour solidariser ces crochets respectivement avec ladite embase (39) ou avec ledit organe (11).

21. Ensemble de console (1) selon la revendication 20, **caractérisé en ce que** lesdits moyens de solidarisation (75, 77, 87) comprennent d'une part des encoches (75, 77) formées respectivement dans ladite embase (39) ou dans ledit organe de support (11) de manière à bloquer certains (67, 69) desdits crochets (67, 69, 71, 73), et d'autre part un loquet rotatif (87) destiné à bloquer les autres crochets (71, 73).

22. Ensemble de console (1) selon l'une quelconque des revendications 14, 16 ou 19 **caractérisé en ce que** lesdits moyens de montage comprennent une pluralité de logements (147a, 147b, 147c, 147d) formés dans ladite embase (39), une pluralité de plots (155a, 155b, 155c, 155d) montés rotatifs sur ledit organe de support (11) et comprenant chacun une protubérance (161a, 161b, 161c, 161d) correspondant sensiblement aux volumes défini par lesdits logements (147a, 147b, 147c, 147d), et des moyens pour faire tourner lesdits plots (155a, 155b, 155c, 155d) de manière à engager lesdites protubérances (161a, 161b, 161c, 161d) à l'intérieur desdits logements (147a, 147b, 147c, 147d).

23. Ensemble de console (1) selon la revendication 22, **caractérisé en ce que** lesdits plots (155a, 155b, 155c, 155d) comprennent chacun une zone dentée (159a, 159b, 159c, 159d), et **en ce que** lesdits moyens pour faire tourner ces plots comprennent un élément (151) monté rotatif sur ledit organe de support (11) et comprenant lui-même une zone dentée (153) coopérant avec les zones dentées (159a, 159b, 159c, 159d) desdits plots.

24. Ensemble de console (1) selon l'une des revendications 21 ou 23, **caractérisé en ce qu'**il comprend une manette (89) pour actionner ledit loquet (87) ou ledit élément (151), et **en ce que** cette manette (89) s'étend vers l'avant de ladite console (5).

25. Ensemble de console (1) selon l'une quelconque des revendications 12 ou 14 ou 16 ou 19, **caractérisé en ce qu'**il comprend des moyens (165, 167, 169, 173) pour verrouiller ledit organe de support (11) sur ladite console (5) lorsqu'on sépare cette dernière de ladite embase (39).

26. Ensemble de console (1) selon la revendication 25, **caractérisé en ce que** lesdits moyens de verrouillage comprennent :
- une tringle (165) montée rotative sur ledit organe de support (11) et s'étendant selon une direction sensiblement parallèle à celle desdits rails (13a, 13b), supportant des premier (167) et deuxième (168) ergots décalés axialement et angulairement l'un par rapport à l'autre,
- des moyens de logement (169) solidaires de ladite console (5) et situés au droit dudit premier ergot (167),
- des moyens de nervure (173) solidaires de ladite embase (39) et placés de manière à pouvoir pousser sur ledit deuxième ergot (168) afin d'écarter ledit premier ergot (167) desdits moyens de logement (169), de manière a autoriser les mouvements de ladite console (5) par rapport audit organe de support (11) lorsque cette console (5) est placée sur ladite embase (39), et
- des moyens élastiques pour rappeler ladite tringle (165) vers une position où ledit premier ergot (167) est engagé dans lesdits moyens de logement (169), de manière à bloquer ladite console (5) par rapport audit organe de support (11) lorsque cette console (5) est séparée de ladite embase (39).

27. Ensemble de console selon l'une quelconque des revendications 12 ou 14 ou 16 ou 19, **caractérisé en ce qu'**il comprend deux pistes (149a, 149b) s'étendant à partir de ladite embase (39), de part et d'autre de celle-ci, et **en ce que** ladite console comprend une petite roue (163) agencée de manière à pouvoir coopérer avec lesdites pistes (149a, 149b).

28. Ensemble de console (1) selon l'une quelconque des revendications 6 ou 16 ou 19, **caractérisé en ce que** ledit organe de support (11) est un étrier, lesdits moyens (13a, 13b, 17a, 19a, 17b, 19b) pour faire coulisser ladite console (5) étant interposés entre cette console et les ailes (21a, 21b) de cet étrier.

29. Ensemble de console (1) selon la revendication 28, **caractérisé en ce que** ladite console (5) comprend un compartiment (51) s'étendant notamment entre les ailes (21a, 21b) dudit étrier et pouvant être fermé par un couvercle (7).

30. Ensemble de console (1) selon la revendication 29 lorsqu'elle dépend de la revendication 14, **caractérisé en ce que** ledit compartiment (51) définit une chambre (53) située à l'intérieur du volume défini par ladite console et communiquant avec ladite cavité (43) par l'intermédiaire dudit orifice (50).

31. Ensemble de console (1) selon l'une quelconque des revendications précédentes, **caractérisé en ce que** lesdits moyens pour bloquer ladite console (5) dans ladite pluralité de positions prédéterminées comprennent une tige crantée (23) montée mobile sur ladite console (5) entre une position embrayée où l'un au moins desdits crans (25) coopère avec au moins un doigt d'indexation (29) solidaire desdits moyens de support (9), et une position débrayée où cette tige (23) est écartée de ce doigt (29).

32. Ensemble de console (1) selon l'une quelconque des revendications 1 à 30, **caractérisé en ce que** lesdits moyens de blocage (117a, 117b, 119a, 119b, 121a, 121b, 123a, 123b) comprennent des moyens de came (121a, 121b, 123a, 123b) montés rotatifs sur ladite console (5) entre une position embrayée dans laquelle ces moyens de came (121a, 121b, 123a, 123b) s'appuient contre au moins une surface de contact (124a, 124b, 125a, 125b) formée sur lesdits moyens de support (9), et une position débrayée dans laquelle ces moyens de came (121a, 121b, 123a, 123b) sont écartés de ladite surface de contact (124a, 124b, 125a, 125b).

33. Ensemble de console (1) selon la revendication 32, **caractérisé en ce que** lesdits moyens de came comprennent une pluralité de cames (121a, 121b, 123a, 123b) supportées par une pluralité de tiges d'actionnement (117a, 117b, 119a, 119b) montées rotatives à l'intérieur de logements formés dans lesdits moyens de support (9).

34. Ensemble de console (1) selon l'une quelconque des revendications 1 à 30, **caractérisé en ce que** lesdits moyens pour bloquer ladite console (5) dans ladite pluralité de positions prédéterminées comprennent au moins une tige d'actionnement (117a, 117b, 119a, 119b) supportant au moins une came (121a, 121b, 123a, 123b), cette tige étant montée rotative sur ladite console (5) entre une position embrayée dans laquelle ladite came (121a, 121b, 123a, 123b) s'appuie contre une surface de contact (124a, 124b, 125a, 125b) formée sur lesdits moyens de support (9), et une position débrayée où ladite came (121a, 121b, 123a, 123b) est écartée de ladite surface de contact (124a, 124b, 125a, 125b).

35. Ensemble de console (1) selon la des revendications 34 lorsqu'elle dépend de l'une des revendications 1 ou 7, **caractérisé en ce qu'**il comprend quatre tiges d'actionnement (117a, 117b, 119a, 119b) s'étendant dans quatre logements formés dans lesdits rails (13a, 13b).

36. Ensemble de console (1) selon l'une quelconque des revendications 31 ou 33 ou 34 ou 35, **caractérisé en ce qu'**il comprend au moins une poignée d'actionnement (31) de ladite tige (23 ; 117a, 117b, 119a, 119b) située à l'une (33) des extrémités (33, 37) de ladite console (5).

37. Ensemble de console (1) selon la revendication 36, **caractérisé en ce qu'**il comprend deux poignées d'actionnement (31) situées à deux extrémités opposées (33, 37) de ladite console (5).

## Claims

1. A console assembly (1) in particular for the passenger space of an automobile vehicle comprising a console (5), support means (9) adapted to be secured on a portion of the floor (3) of the passenger space, means (13a, 13b, 17a, 19a, 17b, 19b) adapted to cause the console (5) to slide on the support means (9) and means (23, 29; 117a, 117b, 119a, 119b, 121 a, 121b, 123a, 123b) adapted to lock the console (5) in a plurality of predetermined positions with respect to the support means (9), the means (13a, 13b, 17a, 19a, 17b, 19b) adapted to cause the console (5) to slide being disposed at least partly within the volume defined by the console (5), the means (13a, 13b, 17a, 19a, 17b, 19b) adapted to cause the console (5) to slide comprising rails (13a, 13b), **characterised in that** the rails (13a, 13b) are secured within the console (5) and are gripped between pairs of castors (17a, 19a, 17b, 19b) mounted on a support member (11), the rails being secured on inner surfaces of lateral walls (15a, 15b) of the console, the means adapted to cause the console to slide on the support means being well protected by the console.

2. A console assembly (1) as claimed in claim 1, **characterised in that** the means (13a, 13b, 17a, 19a, 17b, 19b) adapted to cause the console (5) to slide are disposed fully within its volume.

3. A console assembly (1) as claimed in one of claims 1 or 2, **characterised in that** the means (23, 29; 117a, 117b, 119a, 119b, 121a, 121b, 123a, 123b) adapted to lock the console (5) are disposed at least partly within its volume.

4. A console assembly (1) as claimed in claim 3, **characterised in that** the means (23, 29; 117a, 117b, 119a, 119b, 121a, 121b, 123a, 123b) adapted to lock the console (5) are disposed fully within its volume.

5. A console assembly (1) as claimed in any one of the preceding claims, **characterised in that** the support means (9) are shaped so that the console (5) is adapted to be practically in contact with the floor portion (3) in whichever of the predetermined positions it is occupying.

6. A console assembly (1) as claimed in any one of the preceding claims, **characterised in that** the support means (9) comprise the support member (11) extending at least partly within the volume defined by the console (5), the means (13a, 13b, 17a, 19a, 17b, 19b) adapted to cause the console (5) to slide being interposed between the latter and the support member (11).

7. A console assembly (1) as claimed in claim 1, **characterised in that** the rails (13a, 13b) secured to the interior of the console (5) are C-shaped and each receive at least two castors (17a, 19a, 17b, 19b).

8. A console assembly (1) as claimed in one of claims 1 or 7, **characterised in that** it comprises means (95a, 95b, 99a, 99b; 105, 106, 107, 108) adapted to offset the play between the castors (17a, 19a, 17b, 19b) and the rails (13a, 13b).

9. A console assembly as claimed in claims 1 and 8, **characterised in that** the play offsetting means comprise pairs of slides (95a, 95b) mounted to slide within grooves (97a, 97b) formed on the support member (11), each slide supporting one of the castors (17a, 19a, 17b, 19b), resilient means (99a, 99b) being interposed between the two slides of the same pair so as to keep the latter spaced from one another, and the grooves (97a, 97b) being shaped such that this maintained spacing has the effect of reinforcing the gripping of the rails (13a, 13b) by the castors (17a, 19a, 17b, 19b).

10. A console assembly (1) as claimed in claims 1 and 8, **characterised in that** the play offsetting means comprise rollers (105, 106) spaced from one another by resilient means such as a spring (107) mounted on a rod (108) itself mounted in a rigid manner on one (105) of the rollers and sliding on the other (106) of these rollers, these rollers being interposed between the castors (17a, 19a, 17b, 19b) and the rails (13a, 13b).

11. A console assembly (1) as claimed in one of claims 1 to 10, **characterised in that** the support member (11) is adapted to be mounted directly on the floor portion (3).

12. A console assembly (1) as claimed in one of claims 1, 6 to 10, **characterised in that** the support means (9) further comprise a base (39) adapted to be embedded in the floor portion (3) and to receive the support member (11).

13. A console assembly (1) as claimed in claim 12, **characterised in that** the base (39) comprises at least one housing (41) adapted to receive a male or female electrical connector (42) and/or at least one cavity (43) adapted to enable the passage of a flow of air, and **in that** the support member (11) comprises an opening (47) adapted to receive a second electrical connector (49) adapted to cooperate with the first electrical connector (42) and/or an orifice (50) adapted to be disposed facing the cavity (43).

14. A console assembly (1) as claimed in one of claims 12 or 13, **characterised in that** it comprise means (59, 61, 63, 65, 67, 69, 71, 73, 75, 77, 87; 147a, 147b, 147c, 147d, 155a, 155b, 155c, 155d, 161a, 161b, 161c, 161d) for mounting the support member (11) in a disengageable manner on the base (39).

15. A console assembly (1) as claimed in claim 1, **characterised in that** the support means (9) comprise means (59, 61, 63, 65, 67, 69, 71, 73, 75, 77, 87; 147a, 147b, 147c, 147d, 155a, 155b, 155c, 155d, 161a, 161b, 161c, 161d) enabling the console (5) to be mounted in a disengageable manner on the floor portion (3).

16. A console assembly (1) as claimed in claim 15, **characterised in that** the support means (9) comprise a support member (11) extending at least partly into the volume defined by the console (5), the means (13a, 13b, 17a, 19a, 17b, 19b) adapted to cause this console (5) to slide being interposed between the latter and the support member (11).

17. A console assembly (1) as claimed in claim 1, **characterised in that** the support means (9) further comprise a base (39) adapted to be embedded in the floor portion (3) and to receive the support member (11).

18. A console assembly (1) as claimed in claim 1, **characterised in that** the support means (9) comprise means (59, 61, 63, 65, 67, 69, 71, 73, 75, 77, 87; 147a, 147b, 147c, 147d, 155a, 155b, 155c, 155d, 161a, 161b, 161c, 161d) enabling the console (5) to be mounted in a disengageable manner on the floor portion (3).

19. A console assembly (1) as claimed in claim 18, **characterised in that** the support means (9) comprise a support member (11) extending at least partly into the volume defined by the console (5), a base (39) adapted to be fixed on the floor portion (3), and the means (59, 61, 63, 65, 67, 69, 71, 73, 75, 77, 87; 147a, 147b, 147c, 147d, 155a, 155b, 155c, 155d, 161a, 161b, 161c, 161d) enabling the console (5) to be mounted in a disengageable manner are adapted to mount the support member (11) in a disengageable manner on the base (39).

20. A console assembly (1) as claimed in any one of claims 14, 16 or 19, **characterised in that** the mounting means comprise hooks (67, 69, 71, 73) rigid with the support member (11) or the base (39) and means (75, 77, 87) for making these hooks rigid with the base (39) or the member (11) respectively.

21. A console assembly (1) as claimed in claim 20, **characterised in that** the rigid securing means (75, 77, 87) comprise notches (75, 77) formed in the base (39) or in the support member (11) respectively so as to lock certain (67, 69) of the hooks (67, 69, 71, 73) and a rotary catch (87) adapted to lock the other hooks (71, 73).

22. A console assembly (1) as claimed in any one of claims 14, 16 or 19, **characterised in that** the mounting means comprise a plurality of housings (147a, 147b, 147c, 147d) formed in the base (39), a plurality of pins (155a, 155b, 155c, 155d) mounted to rotate on the support member (11) and each comprising a projection (161a, 161b, 161c, 161d) corresponding substantially to the volumes defined by the housings (147a, 147b, 147c, 147d) and means for causing the pins (155a, 155b, 155c, 155d) to rotate in order to engage the projections (161a, 161b, 161c, 161d) within the housings (147a, 147b, 147c, 147d).

23. A console assembly (1) as claimed in claim 22, **characterised in that** the pins (155a, 155b, 155c, 155d) each comprise a toothed zone (159a, 159b, 159c, 159d), and **in that** the means for causing the rotation of these pins comprise a member (151) mounted to rotate on the support member (11) and itself comprising a toothed zone (153) cooperating with the toothed zones (159a, 159b, 159c, 159d) of the pins.

24. A console assembly (1) as claimed in one of claims 21 or 23, **characterised in that** it comprises a handle (89) adapted to actuate the catch (87) or the member (151) and **in that** this handle (89) extends towards the front of the console (5).

25. A console assembly (1) as claimed in any one of claims 12, 14, 16 or 19, **characterised in that** it comprises means (165, 167, 169, 173) adapted to lock the support member (11) on the console (5) when the latter is separated from the base (39).

26. A console assembly (1) as claimed in claim 25, **characterised in that** the locking means comprise:
- a rod (165) mounted to rotate on the support member (11) and extending in a direction substantially parallel to that of the rails (13a, 13b), supporting first (167) and second (168) lugs offset axially and angularly with respect to one another,
- housing means (169) rigid with the console (5) and disposed at right angles to the first lug (167),
- rib means (173) rigid with the base (39) and disposed so as to be able to urge the second lug (168) to as to space the first lug (167) from the housing means (169) so as to enable the movements of the console (5) with respect to the support member (11) when the console (5) is disposed on the base (39),
- resilient means for recalling the rod (165) into a position in which the first lug (167) is engaged in the housing means (169) so as to lock the console (5) with respect to the support member (11) when the console (5) is separated from the base (39).

27. A console assembly as claimed in any one of claims 12, 14, 16 or 19, **characterised in that** it comprises two tracks (149a, 149b) extending from the base (39) on either side thereof, and **in that** the console comprises a small wheel (163) arranged so as to be able to cooperate with these tracks (149a, 149b).

28. A console assembly (1) as claimed in any one of claims 6, 16 or 19, **characterised in that** the support member (11) is a yoke, the means (13a, 13b, 17a, 19a, 17b, 19b) adapted to cause the console (5) to slide being interposed between this console and the flanges (21 a, 2 1 b) of this yoke.

29. A console assembly (1) as claimed in claim 28, **characterised in that** the console (5) comprises a compartment (51) which extends in particular between the flanges (21a, 21b) of the yoke and may be closed by a cover (7).

30. A console assembly (1) as claimed in claim 29 when dependent on claim 14, **characterised in that** the compartment (51) defines a chamber (53) disposed within the volume defined by the console and communicating with the cavity (43) by means of the orifice (50).

31. A console assembly (1) as claimed in any one of the preceding claims, **characterised in that** the means for locking the console (5) in the plurality of predetermined positions comprise a notched rod (23) mounted to move on the console (5) between an engaged position in which at least one of the notches (25) cooperates with at least one indexing finger (29) rigid with the support means (9) and a disengaged position in which the rod (23) is spaced from this finger (29).

32. A console assembly (1) as claimed in any one of claims 1 to 30, **characterised in that** the locking means (117a, 117b, 119a, 119b, 121a, 121b, 123a, 123b) comprise cam means (121a, 121b, 123a, 123b) mounted to rotate on the console (5) between an engaged position in which these cam means (121a, 121b, 123a, 123b) bear against at least one contact surface (124a, 124b, 125a, 125b) formed on the support means (9) and a disengaged position in which these cam means (121a, 121b, 123a, 123b) are spaced from this contact surface (124a, 124b, 125a, 125b).

33. A console assembly (1) as claimed in claim 32, **characterised in that** the cam means comprise a plurality of cams (121a, 121b, 123a, 123b) borne by a plurality of actuation rods (117a, 117b, 119a, 119b) mounted to rotate within housings formed in the support means (9).

34. A console assembly (1) as claimed in any one of claims 1 to 30, **characterised in that** the means for locking the console (5) in the plurality of predetermined positions comprise at least one actuation rod (117a, 117b, 119a, 119b) bearing at least one cam (121a, 121b, 123a, 123b), this rod being mounted to rotate on the console (5) between an engaged position in which the cam (121a, 121b, 123a, 123b) bears against a contact surface (124a, 124b, 125a, 125b) formed on the support means (9) and a disengaged position in which the cam (121a, 121b, 123a, 123b) is spaced from this contact surface (124a, 124b, 125a, 125b).

35. A console assembly (1) as claimed in claim 34 when dependent on one of claims 1 or 7, **characterised in that** it comprises four actuation rods (117a, 1176, 119a, 119b) extending into four housings formed in the rails (13a, 13b).

36. A console assembly (1) as claimed in any one of claims 31, 33, 34 or 35, **characterised in that** it comprises at least one actuation handle (31) of the rod (23; 117a, 117b, 119a, 119b) disposed at one (33) of the ends (33, 37) of the console (5).

37. A console assembly (1) as claimed in claim 36, **characterised in that** it comprise two actuation handles (31) disposed at two opposing ends (33, 37) of the console (5).

## Patentansprüche

1. Konsolengesamtheit (1), insbesondere für die Fahrgastzelle eines Kraftfahrzeuges, mit einer Konsole (5), Lagcrmitteln (9), die dazu bestimmt sind, auf einem Bodenabschnitt (3) der Fahrgastzelle befestigt zu werden, Mitteln (13a, 13b, 17a, 19a, 17b, 19b), um die Konsole (5) auf den Lagermitteln (9) gleiten zu lassen, und Mitteln (23, 29; 117a, 117b, 119a, 119b, 121a, 121b, 123a, 123b), um die Konsole (5) in einer Mehrzahl von vorbestimmten Stellungen im Verhältnis zu den Lagerznitteln (9) zu blockieren, wobei die Mittel (13a, 13b, 17a, 19a, 17b, 19b) zum Gleitenlassen der Konsole (5) zumindest teilweise im Inneren des durch die Konsole (5) definierten Volumens angeordnet sind, wobei die Mittel (13a, 13b, 17a, 19a, 17b, 19b) zum Gleitenlassen der Konsole (5) Schienen (13a, 13b) umfassen, **dadurch gekennzeichnet, dass** die Schienen (13a, 13b) im Inneren der Konsole (5) befestigt sind und zwischen auf einem Träger (11) montierten Rollenpaaren (17a, 19a, 17b, 19b) geklemmt sind, wobei die Schienen an Innenflächen von Seitenwandungen (15a, 15b) der Konsole befestigt sind, wobei die Mittel zum Gleitenlassen der Konsole auf den Lagermitteln durch die Konsole gut geschützt sind.

2. Konsolengesamtheit (1) gemäß Anspruch 1, **dadurch gekennzeichnet, dass** die Mittel (13a, 13b, 17a, 19a, 17b, 19b) zum Gleitenlassen der Konsole (5) vollständig im Inneren des Volumens angeordnet sind.

3. Konsolengesamtheit (1) gemäß einem der Ansprüche 1 oder 2, **dadurch gekennzeichnet, dass** die Mittel (23, 29; 117a, 117b, 119a, 119b, 121a, 121b, 123a, 123b) zum Blockieren der Konsole (5) zumindest teilweise im Inneren des Volumens angeordnet sind.

4. Konsolengesamtheit (1) gemäß Anspruch 3, **dadurch gekennzeichnet, dass** die Mittel (23, 29; 117a, 117b, 119a, 119b, 121 a, 121b, 123a, 123b) zum Blockieren der Konsole (5) vollständig im Inneren des Volumens angeordnet sind.

5. Konsolengesamtheit (1) gemäß einem der vorhergehenden Ansprüche, **dadurch gekennzeichnet, dass** die Lagermittel (9) so angepasst sind, dass die Konsole (5) dafür abgestimmt ist, fast in Berührung mit dem Bodenabschnitt (3) zu sein, unabhängig davon, welche diejenige von den vorbestimmten Stellungen ist, die sie einnimmt.

6. Konsolengesamtheit (1) gemäß einem der vorhergehenden Ansprüche, **dadurch gekennzeichnet, dass** die Lagermittel (9) den Träger (11) umfassen, welcher sich zumindest teilweise im Inneren des durch die Konsole (5) definierten Volumens erstreckt, wobei die Mittel (13a, 13b, 17a, 19a, 17b, 19b) zum Gleitenlassen dieser Konsole (5) zwischen letzterer und dem Träger (11) gesetzt sind.

7. Konsolengesamtheit (1) gemäß Anspruch 1, **dadurch gekennzeichnet, dass** die im Inneren der Konsole (5) befestigten Schienen (13a, 13b) eine C-Form haben und jede mindestens zwei Rollen (17a, 19a, 17b, 19b) aufnehmen.

8. Konsolengesamtheit (1) gemäß einem der Ansprüche 1 oder 8, **dadurch gekennzeichnet, dass** sie Mittel (95a, 95b, 99a, 99b; 105, 106, 107, 108) zum Auffangen der Spiele zwischen den Rollen (17a, 19a, 17b, 19b) und den Schienen (13a, 13b) umfasst.

9. Konsolengesamtheit (1) gemäß den Ansprüchen 1 und 9, **dadurch gekennzeichnet, dass** die Mittel zum Auffangen von Spiel Glcitblockpaare (95a, 95b) umfassen, die gleitend im Inneren von auf dem Träger (11) ausgebildeten Nuten (97a, 97b) montiert sind, wobei jeder Gleitblock eine der Rollen (17a, 19a, 17b, 19b) trägt, wobei elastische Mittel (99a, 99b) zwischen den zwei Gleitblöcken eines selben Paares angeordnet sind, um letztere voneinander beabstandet zu halten, und wobei die Nuten (97a, 97b) so ausgeformt sind, dass dieses Abstandhalten die Wirkung hat, das Einklemmen der Schienen (13a, 13b) durch die Rollen (17a, 19a, 17b, 19b) zu verstärken.

10. Konsolengesamtheit (1) gemäß den Ansprüchen 7 und 8, **dadurch gekennzeichnet, dass** die Mittel zum Auffangen von Spiel Rollen (105, 106) umfassen, die durch elastische Mittel voneinander beabstandet sind wie eine Feder (107), die auf einem Stift (108) montiert ist, der selbst fest auf einer (105) der Rollen und gleitend auf der anderen (106) dieser Rollen montiert ist, wobei diese Rollen zwischen den Rollen (17a, 19a, 17b, 19b) und den Schienen (13a, 13b) angeordnet sind.

11. Konsolengesamtheit (1) gemäß einem der Ansprüche 1 bis 10, **dadurch gekennzeichnet, dass** der Träger (11) dafür angepasst ist, um direkt auf dem Bodenabschnitt (3) montiert zu werden.

12. Konsolengesamtheit (1) gemäß einem der Ansprüche 1, 6 bis 10, **dadurch gekennzeichnet, dass** die Lagermittel (9) außerdem einen Sockel (39) umfassen, der dazu bestimmt ist, in dem Bodenabschnitt (3) eingelassen zu werden und den Träger (11) aufzunehmen.

13. Konsolengesamthcit (1) gemäß Anspruch 12, **dadurch gekennzeichnet, dass** der Sockel (39) wenigstens eine Aufnahme (41) aufweist, die dazu bestimmt ist, einen männlichen oder weiblichen elektrischen Verbinder (42) aufzunehmen und/oder wenigstens einen Hohlraum (43), der dazu bestimmt ist, den Durchfluss eines Luftstroms zu erlauben, und **dadurch**, dass der Träger (11) eine Öffnung (47) aufweist, die dazu bestimmt ist, einen zweiten elektrischen Verbinder (49) aufzunehmen, der dazu bestimmt ist, mit dem ersten elektrischen Verbinder (42) zusammenzuwirken, und/oder einen Ausgang (50), der dazu bestimmt ist, gegenüber dem Hohlraum (43) angeordnet zu werden.

14. Konsolengesamtheit (1) gemäß einem der Ansprüche 12 oder 13, **dadurch gekennzeichnet, dass** sie Mittel (59, 61, 63, 65, 67, 69, 71, 73, 75, 77, 87; 147a, 147b, 147c, 147d, 155a, 155b, 155c, 155d, 161a, 161b, 161c, 161d) umfasst, um den Träger (11) auf entkoppelbare Weise auf dem Sockel (39) zu montieren.

15. Konsolengesamtheit (1) gemäß Anspruch 1, **dadurch gekennzeichnet, dass** die Lagermittel (9) Mittel (59, 61, 63, 65, 67, 69, 71, 73, 75, 77, 87; 147a, 147b, 147c, 147d, 155a, 155b, 155c, 155d, 161a, 161b, 161c, 161d) umfassen, die es erlauben, die Konsole (5) auf entkoppelbare Weise auf dem Bodenabschnitt (3) zu montieren.

16. Konsolengesamtheit (1) gemäß Anspruch 15, **dadurch gekennzeichnet, dass** die Lagermittel (9) einen Träger (11) umfassen, der sich zumindest teilweise im Inneren des durch die Konsole (5) definierten Volumens erstreckt, wobei die Mittel (13a, 13b, 17a, 19a, 17b, 19b) zum Gleitenlassen der Konsole (5) zwischen letzterer und dem Träger (11) angeordnet sind.

17. Konsolengesamtheit (1) gemäß Anspruch 16, **dadurch gekennzeichnet, dass** die Lagermittel (9) außerdem einen Sockel (39) umfassen, der dazu bestimmt ist, in dem Bodenabschnitt (3) eingelassen zu werden und den Träger (11) aufzunehmen.

18. Konsolengesamtheit (1) gemäß Anspruch 1, **dadurch gekennzeichnet, dass** die Lagermittel (9) Mittel (59, 61, 63, 65, 67, 69, 71, 73, 75, 77, 87; 147a, 147b, 147c, 147d, 155a, 155b, 155c, 155d, 161a, 161b, 161c, 161d) umfassen, um die Konsole (5) auf entkoppelbare Weise auf dem Bodenabschnitt (3) zu montieren.

19. Konsolengesamtheit (1) gemäß Anspruch 18, **dadurch gekennzeichnet, dass** die Lagermittel (9) einen Träger (11) umfassen, der sich zumindest teilweise im Inneren des durch die Konsole (5) definierten Volumens erstreckt, einen Sockel (39), der dazu bestimmt ist, auf dem Bodenabschnitt (3) befestigt zu werden, und wobei die Mittel (59, 61, 63, 65, 67, 69, 71, 73, 75, 77, 87; 147a, 147b, 147c, 147d, 155a, 155b, 155c, 155d, 161a, 161b, 161c, 161d) zum Montieren der Konsole (5) auf entkoppelbare Weise dazu bestimmt sind, den Träger (11) auf entkoppelbare Weise auf dem Sockel (39) zu montieren.

20. Konsolengesamtheit (1) gemäß einem der Ansprüche 14, 16 oder 19, **dadurch gekennzeichnet, dass** die Montagemittel mit dem Träger (11) oder dem Sockel (39) einstückige Haken (67, 69, 71, 73) aufweisen und Mittel (75, 77, 78), um diese Haken jeweils mit dem Sockel (39) oder dem Träger (11) zu verbinden.

21. Konsolengesamtheit (1) gemäß Anspruch 20, **dadurch gekennzeichnet, dass** die Verbindungsmittel (75, 77, 87) einerseits jeweils in dem Sockel (39) oder dem Träger (11) ausgebildete Kerben (75, 77) aufweisen, um bestimmte (67, 69) der Haken (67, 69, 71, 73) zu blockieren, und andererseits einen drehbaren Riegel (87), der dazu bestimmt ist, die anderen Haken (71, 73) zu blockieren.

22. Konsolengesamtheit (1) gemäß einem der Ansprüche 14, 16 oder 19, **dadurch gekennzeichnet, dass** die Montagemittel eine Vielzahl von im Sockel (39) ausgebildeten Sitzen (147a, 147b, 147c, 147d) aufweisen, eine Mehrzahl von Stiften (155a, 155b, 155c, 155d), die drehbar auf dem Träger (11) montiert sind und jeder einen Vorsprung (161a, 161 b, 161c, 161d) aufweisen, der im Wesentlichen dem durch die Sitze (147a, 147b, 147c, 147d) definierten Volumen entspricht, und Mittel, um die Stifte (155a, 155b, 155c, 155d) zu drehen, um die Vorsprünge (161a, 161b, 161c, 161d) in die Sitze (147a, 147b, 147c, 147d) einzubringen.

23. Konsolengesamtheit (1) gemäß Anspruch 22, **dadurch gekennzeichnet, dass** jeder der Stifte (155a, 155b, 155c, 155d) einen gezahnten Abschnitt (159a, 159b, 159c, 159d) aufweist, und **dadurch**, dass die Mittel zum in Drehung bringen der Stifte ein Element (151) umfassen, das drehbar auf dem Träger (11) montiert ist und selbst einen gezahnten Abschnitt (153) aufweist, welcher mit den gezahnten Abschnitten (159a, 159b, 159c, 159d) der Stifte zusammenwirkt.

24. Konsolengesamtheit (1) gemäß einem der Ansprüche 21 oder 23, **dadurch gekennzeichnet, dass** sie einen Griff (89) aufweist, um den Riegel (87) oder das Element (151) zu betätigen, und **dadurch**, dass dieser Griff (89) sich zum Vorderteil der Konsole (5) hin erstreckt.

25. Konsolengesamtheit (1) gemäß einem der Ansprüche 12 oder 14 oder 16 oder 19, **dadurch gekennzeichnet, dass** sie Mittel (165, 167, 169, 173) umfasst, um den Träger (11) auf der Konsole (5) zu verriegeln, wenn man letztere vom Sockel (39) trennt.

26. Konsolengesamtheit (1) gemäß Anspruch 25, **dadurch gekennzeichnet, dass** die Veniegelungsmittel folgendes umfassen:
- eine auf dem Träger (11) drehbar montierte und sich in einer zu den Schienen (13a, 13b) im Wesentlichen parallelen Richtung erstreckende Stange (165), die eine erste (167) und eine zweite (168) Nase trägt, welche im Verhältnis zueinander axial und winklig versetzt sind,
- mit der Konsole (5) einstückige und rechts von der ersten Nase (167) befindliche Aufnahmemittel (169),
- rippenförmige Mittel (173), die mit dem Sockel (39) einstückig sind und so angeordnet sind, dass sie auf die zweite Nase (168) drücken können, um die erste Nase (167) von den Aufnahmemitteln (169) zu beabstanden, um so die Bewegungen der Konsole (5) im Verhältnis zum Träger (11) zu erlauben, wenn diese Konsole (5) auf den Sockel (39) aufgesetzt wird, und
- elastische Mittel, um die Stange (165) in eine Stellung zurückzuführen, in welcher die erste Nase (167) in die Aufnahmemittel (169) eingreift, um so die Konsole (5) im Verhältnis zum Träger (11) zu blockieren, wenn diese Konsole (5) vom Sockel (39) getrennt wird.

27. Konsolengesamtheit gemäß einem der Ansprüche 12 oder 14 oder 16 oder 19, **dadurch gekennzeichnet, dass** sie zwei Spuren (149a, 149b) umfasst, die sich vom Sockel (39) aus erstrecken, auf der einen wie auf der anderen Seite von diesem, und **dadurch**, dass die Konsole ein kleines Rad (163) aufweist, welches derart angeordnet ist, dass es mit den Spuren (149a, 149b) zusammenwirken kann.

28. Konsolengesamtheit (1) gemäß einem der Ansprüche 6 oder 16 oder 19, **dadurch gekennzeichnet, dass** der Träger (11) ein Bügel ist, wobei die Mittel (13a, 13b, 17a, 19a, 17b, 19b) zum Gleitenlassen der Konsole (5) zwischen dieser Konsole und den Flügeln (21a, 21b) dieses Bügels gesetzt sind.

29. Konsolengesamtheit (1) gemäß Anspruch 28, **dadurch gekennzeichnet, dass** die Konsole (5) ein Abteil (51) aufweist, welches sich insbesondere zwischen den Flügeln (21a, 21b) des Bügels erstreckt und durch einen Deckel (7) geschlossen werden kann.

30. Konsolengesamtheit (1) gemäß Anspruch 29, wenn dieser vom Anspruch 14 abhängt, **dadurch** gekertnzeichnet, dass das Abteil (51) einen Raum (53) definiert, der sich im Inneren des durch die Konsole definierten Volumens befindet und mit dem Hohlraum (43) über den Ausgang (50) kommuniziert.

31. Konsolengesamtheit (1) gemäß einem der vorhergehenden Ansprüche, **dadurch gekennzeichnet, dass** die Mittel zum Blockieren der Konsole (5) in der Mehrzahl der vorbestimmten Stellungen eine gezahnte Stange (23) umfassen, die beweglich zwischen einer eingerasteten Stellung, in welcher wenigstens einer der Zähne (25) mit wenigstens einem Indexierungszapfen (29) zusammenwirkt, der einstückig mit den Lagermitteln (9) ist, und einer ausgerasteten Stellung, in welcher diese Stange (23) von diesem Zapfen (29) bcabstaudet ist, auf der Konsole (5) montiert ist.

32. Konsolengesamtheit (1) gemäß einem der Ansprüche 1 bis 30, **dadurch gekennzeichnet, dass** die Blockiermittel (117a, 117b, 119a, 119b, 121a, 121b, 123a, 123b) Nockenmittel (121a, 121b, 123a, 123b) umfassen, die drehbar zwischen einer eingerasteten Stellung, in welcher diese Nockenmittel (121a, 121b, 123a, 123b) sich gegen wenigstens eine auf den Lagermitteln (9) ausgebildete Kontaktfläche (124a, 124b, 125a, 125b) abstützen, und einer ausgerasteten Stellung, in welcher diese Nockenmittel (121a, 121b, 123a, 123b) von der Kontaktfläche (124a, 124b, 125a, 125b) beabstandet sind, auf der Konsole (5) montiert sind.

33. Konsolengesamtheit (1) gemäß Anspruch 32, **dadurch gekennzeichnet, dass** die Nockenmittel eine Mehrzahl Nocken (121a, 121b, 123a, 123b) umfassen, die von einer Mehrzahl von Betätigungsstangen (117a, 117b, 119a, 119b) getragen werden, welche drehbar im Inneren von in den Lagermitteln (9) ausgebildeten Sitzen montiert sind.

34. Konsolengesamtheit (1) gemäß einem der Ansprüche 1 bis 30, **dadurch gekennzeichnet, dass** die Mittel zum Blockieren der Konsole (5) in der Mehrzahl der vorbestimmten Stellungen mindestens eine Betätigungsstange (117a, 117b, 119a, 119b) umfassen, die wenigstens eine Nocke (121a, 121b, 123a, 123b) trägt, wobei diese Stange drehbar zwischen einer eingerasteten Stellung, in welcher die Nocke (121a, 121b, 123a, 123b) sich gegen eine auf den Lagermitteln (9) ausgebildete Kontaktfläche (124a, 124b, 125a, 125b) abstützt, und einer ausgerasteten Stellung, in welcher die Nocke (121a, 121b, 123a, 123b) von der Kontaktfläche (124a, 124b, 125a, 125b) beabstandet ist, auf der Konsole (5) montiert ist.

35. Konsolengesamtheit (1) gemäß Anspruch 34, wenn dieser von einem der Ansprüche 1 oder 7 abhängt, **dadurch gekennzeichnet, dass** sie vier Betätigungsstangen (117a, 117b, 119a, 119b) umfasst, die sich in vier in den Schienen (13a, 13b) ausgebildete Sitze crstrecken.

36. Konsolengesamtheit (1) gemäß einem der Ansprüche 31 oder 33 oder 34 oder 35, **dadurch gekennzeichnet, dass** sie wenigstens einen Betätigungsgriff (31) der Stange (23; 117a, 117b, 119a, 119b) umfasst, der an einem (33) der Enden (33, 37) der Konsole (5) angeordnet ist.

37. Konsolengesamtheit (1) gemäß Anspruch 36, **dadurch gekennzeichnet, dass** sie zwei Betätigungsgriffe (31) umfssst, die an zwei entgegengesetzten Enden (33, 37) der Konsole (5) angeordnet sind.
